Europäisches Patentamt

European Patent Office

Office européen des brevets

(19)

(11) Numéro de publication : **0 183 753**
**B1**

(12) **FASCICULE DE BREVET EUROPÉEN**

(45) Date de publication du fascicule du brevet :
23.11.89

(51) Int. Cl.⁴ : **G 07 F   7/08**, G 09 C   1/02

(21) Numéro de dépôt : **85902565.2**

(22) Date de dépôt : **28.05.85**

(86) Numéro de dépôt international :
**PCT/FR 85/00132**

(87) Numéro de publication internationale :
**WO/8505714 (19.12.85 Gazette 85/27)**

(54) DISPOSITIF DE MARQUAGE DE PRODUITS EN LIAISON AVEC UN ORGANISME CHARGE DE CONTROLER CE MARQUAGE.

(30) Priorité : **29.05.84 FR 8408629**

(43) Date de publication de la demande :
**11.06.86 Bulletin 86/24**

(45) Mention de la délivrance du brevet :
**23.11.89 Bulletin 89/47**

(84) Etats contractants désignés :
**DE FR GB IT SE**

(56) Documents cités :
**EP--A-- 0 097 110**
**WO--A--80 /027 57**
**WO--A--81 /004 76**
**FR--A-- 2 181 409**
**FR--A-- 2 358 704**
**FR--A-- 2 401 465**
**FR--A-- 2 450 011**
**GB--A-- 1 257 163**
**US--A-- 4 226 360**

(73) Titulaire : **IMAJE S.A.**
**9, rue Gaspard Monge Z.A. de l'Armaillier**
**F-26500 Bourg les Valence (FR)**

(72) Inventeur : **MILLET, Jean-Claude**
**16, impasse Colbert**
**F-26500 Bourg les Valence (FR)**

(74) Mandataire : **Dubreuil, Annie**
**Cabinet DUBREUIL Le Suffren 23 rue des Peupliers**
**F-56100 Lorient (FR)**

Jouve, 18, rue St-Denis, 75001 Paris, France

## Description

L'invention concerne un dispositif de marquage de produits en liaison avec un organisme chargé de contrôler ce marquage.

Il existe un certain nombre d'applications où le contrôle de la quantité d'objets conditionnés doit être rigoureusement contrôlée. C'est le cas notamment des produits soumis à une taxe fiscale tels que les tabacs et les alcools. Dans ce cas, un marquage spécifique doit être effectué sur chaque produit mis dans le commerce. Par exemple, dans le cas de la fiscalisation des boissons alcoolisées, un graphisme à l'effigie de Marianne et divers accessoires d'identification sont appliqués sur chaque capsule de bouteille.

A cette nécessité, sont associées plusieurs contraintes :
des contraintes propres à celui qui contrôle,
des contraintes propres à l'utilisateur.

Pour l'Administration ou tout organisme ayant un droit de contrôle, il s'agit avant tout d'éviter la fraude et pour l'utilisateur d'éviter de stocker les emballages porteurs d'une vignette, par exemple fiscale, ce qui conduit à l'immobilisation de sommes importantes, sans compter les risques de détournements frauduleux de ces stocks.

L'invention a pour but d'éviter ces inconvénients et concerne un dispositif permettant d'éliminer à la fois les risques de fraude vis à vis de l'Administration ou de toute autorité disposant d'un droit de contrôle sur le produit et les contraintes de stockage pour les utilisateurs.

Elle concerne plus précisément un dispositif permettant à un premier organisme de contrôler la quantité de produits conditionnés par un second organisme, caractérisé en ce qu'il comprend une imprimante (A) située chez le second organisme et commandée à partir d'un terminal (B) délivrant des instructions de commande placées sous le contrôle direct du premier organisme et conduisant à l'impression d'un message sur chaque produit conditionné, ce message imprimé étant variable pour chaque produit et son contenu étant issu d'un algorithme de cryptage connu du seul premier organisme afin d'en assurer l'authenticité.

L'invention sera mieux comprise à l'aide des explications qui vont suivre et de la figure unique jointe qui illustre schématiquement la combinaison des moyens permettant la mise en œuvre du dispositif conforme à l'invention.

Le dispositif selon l'invention consiste essentiellement à connecter l'imprimante chargée de l'inscription d'un graphisme symbolisant un code à un dispositif de contrôle et de commande placé sous la surveillance de l'organisme chargé de contrôler et de sélectionner cette inscription, dont la fonction est, d'une part, de permettre cette inscription et, d'autre part, de comptabiliser le nombre d'inscriptions effectivement réalisées. Il consiste également à connecter l'imprimante à la chaîne de conditionnement pour effectuer l'inscription lorsque le dispositif de contrôle et de commande en donnera le signal.

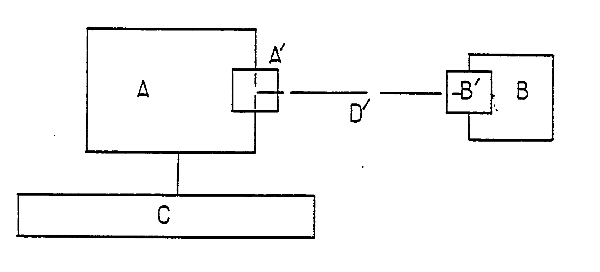

Un tel dispositif est illustré au moyen de la figure 1. Plusieurs sous-ensembles coopèrent entre eux de la manière décrite ci-dessous. Tout d'abord, un ensemble (A) est constitué d'une imprimante dotée de moyens d'interface (A') qui la relie à travers une ligne (D) et un interface (B') à un ensemble (B) qui constitue le périphérique de contrôle et de commande déjà énoncé précédemment. Enfin, l'ensemble (A) est relié à l'unité de conditionnement (C) des produits qui doivent recevoir le marquage, par exemple une vignette de fiscalisation.

Conformément à l'invention, l'ensemble (B) est placé sous l'autorité directe de celui qui est investi d'un droit de contrôle, qui, dans l'exemple choisi, se trouve être les services fiscaux, tandis que la combinaison des sous-ensembles (A) et (C), dont le nombre peut être quelconque, se trouve directement placée sous la surveillance de l'utilisateur, celui-ci étant ici défini comme étant celui qui appose le signe distinctif, en l'occurrence la vignette fiscale.

Le sous-ensemble (A) est par exemple construit autour d'une imprimante à projection d'encre du type multibuse permettant l'application d'un graphisme réalisé à partir de l'application successive de (n) colonnes de (x) points appelés trames. Le choix d'un tel type d'imprimante, ou de tout autre moyen équivalent est fondamental, la réalisation du graphisme devant effectivement être réalisée à partir de sous-ensembles élémentaires tels que par exemple des points.

Cette imprimante fonctionne préférentiellement en mode graphique et seules les fonctions de génération de trames sont réalisées au niveau de l'imprimante, la fonction mémorisation de trames et/ou de la génération du graphisme étant reportée au niveau du terminal (B). L'imprimante a la possibilité de fonctionner en mode local, comme cela sera expliqué ultérieurement, mais uniquement sur un nombre limité de graphismes. Une seconde fonction essentielle de ce terminal (B) est la comptabilisation des vignettes de fiscalisation apposées. Il assure également la gestion de la commande des divers graphismes.

Deux cas sont à considérer. D'une part, la vérification du bon fonctionnement de l'imprimante sans qu'un décompte intervienne de la part de l'organisme contrôleur. D'autre part, l'intervention de cet organisme lorsque cette première étape s'avère concluante. Pour cela, dans un premier temps, l'utilisateur met l'imprimante en service : il s'agit pour lui de vérifier que son dispositif fonctionne sans problème. Pour ce faire, il exécute un programme, dit programme « test » et vérifie que toutes les fonctions peuvent être correctement assurées. Pendant cette phase de fonctionnement, la liaison entre l'ensemble (A) (imprimante) et le terminal (B) placé sous le contrôle de l'organisme concerné est interrompu. Donc, le graphisme de fiscalisation dans l'exemple choisi à titre d'illustration ne risque pas d'être comptabilisé au détriment de l'utilisateur. Par conséquent, aucune comptabilisation au niveau de l'organisme centralisateur (contrôleur) ne peut avoir lieu. Les sous-ensembles (A) et (B) sont déconnectés.

Dans ces conditions, l'utilisateur peut donc s'assurer et vérifier que tout se passe bien. Il réalise alors un cryptage du contenu lisible du message utilisant des caractères alphanumériques classiques et des éléments de message conventionnels tels par exemple : date, heure, minute, seconde ... de production ou encore le numéro de l'emballage marqué. L'utilisateur peut utiliser la combinaison de ces informations et les imprimer pour tout ou partie en clair et/ou en code-barres. Les informations ainsi inscrites peuvent éventuellement ultérieurement être lues et confrontées avec les informations algorithmiques générées par l'élément de contrôle et de commande (B). L'utilisateur, outre le cryptage du contenu lisible du message, peut également procéder au cryptage du graphisme. Il peut, en effet, sur la base d'un procédé algorithmique altérer certaines trames du graphisme par rajout, coalescence ou élimination de certains points. En cela, la technique de l'écriture par jet d'encre se prête tout particulièrement à ces combinaisons.

Cette phase de test étant réalisée et toutes les fonctions s'avérant correctement remplies, l'utilisateur juge alors qu'il peut faire entrer dans le jeu le terminal (B) commandé et contrôlé par l'organisme qui le surveille et qui, à ce titre, a la charge de comptabiliser ces actions. Il se met alors volontairement en liaison avec ce terminal (B). Il obtient alors la délivrance des « vignettes », c'est-à-dire des signaux commandant son imprimante (A) qui réalise alors le graphisme concerné selon le programme mis préalablement en mémoire. Cette démarche atteste du fait qu'il a ou va acquitter les taxes afférentes à chaque produit marqué. A cette opération de délivrance de la « vignette » correspond, de manière concomitante, la liaison entre l'imprimante (A) et la chaîne de conditionnement (C). Sur chaque objet marqué, se trouve alors inscrit un moyen de preuve dont la comptabilisation est assurée également au niveau de l'organisme qui en contrôle la distribution.

Ensuite, quand cette opération programmée s'arrête, la déconnection entre l'imprimante (A) et le terminal (B) a lieu, ce qui provoque automatiquement, au niveau de l'imprimante, la perte de la mémoire contenant les informations relatives à l'impression de la vignette. L'imprimante s'arrête.

Un tel dispositif conduit l'utilisateur à économiser des stocks inutiles et à ne pas se trouver propriétaire de vignettes en surplus, vignettes qu'il risque de se voir voler, ou qui de toute façon, constituent pour lui un investissement inutile.

Un tel dispositif présente également le grand avantage de pouvoir être mis en œuvre lorsque la forme ou l'aspect du produit à marquer ne permet pas d'y apposer, par les procédés classiques, les marques de fiscalisation.

Dans ces conditions, l'utilisateur n'a pas à conserver par devers lui des vignettes trop longtemps avant qu'elles ne fassent l'objet d'une commercialisation. De même, les services fiscaux (dans l'exemple choisi pour illustrer l'invention) sont certains de récupérer les fonds qui leur sont dus. Ceci étant acquis, conformément à une autre caractéristique importante de l'invention, l'organisme habilité à contrôler la mise sur le marché des produits concernés dispose de moyens pour éviter toute fraude. En effet, il dispose du terminal (B) à partir duquel il peut contrôler toute l'information contenue dans la « vignette » dont il assure l'impression en délivrant les signaux de commande correspondants. Il peut donc programmer cette information selon son choix. Par exemple, si l'on considère que cette information est définie par des coordonnées (x y) il peut pour chacune de ces coordonnées programmer l'information de son choix, tout à fait arbitrairement par rapport à l'utilisateur. Ainsi, il peut ajouter un point dans une zone déterminée de la vignette, la position de ce point étant, par exemple, liée au numéro de l'utilisateur, (conditionneur) à la minute et à la seconde du conditionnement. Il s'agit là d'un paramètre dont il peut jouer de manière aléatoire, connu seulement de lui, mais qui, vis à vis de lui, reste caractéristique de l'utilisateur.

La liaison entre l'imprimante (A) et le terminal (B) peut s'effectuer par les moyens classiques de télécommunication. Dans ce cas, le terminal (B) se trouve dans les locaux de l'organisme contrôleur, par exemple les locaux de l'inspection fiscale. L'utilisateur pour obtenir la délivrance du signal qui déclenchera la séquence d'impression et commandera son imprimante (A) devra alors présenter son code personnel. Cette liaison peut également être obtenue au moyen d'une carte à mémoire délivrée par l'organisme contrôleur et le terminal (B) se trouvera alors implanté dans les locaux de l'utilisateur. Chaque carte à mémoire, initialement personnalisée par le donneur d'ordre comportera alors un certain nombre de vignettes qui seront décomptées à l'utilisateur au fur et à mesure de leur consommation.

Un tel dispositif conforme à l'invention se prête à de nombreuses applications. On a plus longuement décrit des applications fiscales, mais il pourrait également être mis en œuvre par des franchiseurs ou des concédants de licences pour contrôler le nombre d'articles commercialisés, notamment, sous leur marque.

## Revendications

1. Dispositif permettant à un premier organisme de contrôler la quantité de produits conditionnés par un second organisme, caractérisé en ce qu'il comprend une imprimante (A) située chez le second organisme et commandée à partir d'un terminal (B) délivrant des instructions de commande placées sous le contrôle direct du premier organisme et conduisant à l'impression d'un message sur chaque produit conditionné, ce message imprimé étant variable pour chaque produit et son contenu étant issu d'un algorithme de cryptage connu du seul premier organisme afin d'en assurer l'authenticité.

2. Dispositif selon la revendication 1, caractérisé en ce que cet algorithme est une fonction du numéro de l'emballage marqué et de l'heure, minute, seconde de marquage.

3. Dispositif selon l'une des revendications précédentes, caractérisé en ce que ce message est une vignette de fiscalisation.

4. Dispositif selon l'une des revendications précédentes, caractérisé en ce que des moyens de comptabilisation permettent au dit premier organisme de décompter le nombre de messages délivrés.

5. Dispositif selon l'une des revendications précédentes, caractérisé en ce que les instructions de commande sont délivrées à partir d'un terminal (B) situé dans les locaux dudit premier organisme.

6. Dispositif selon l'une des revendications 1 et 2, caractérisé en ce que les instructions de commande sont mémorisées dans une carte à mémoire contenant une quantité déterminée de messages et fournie au second organisme par ledit premier organisme, le terminal (B) commandant l'imprimante étant alors située dans les locaux du second organisme.

7. Dispositif selon l'une des revendications précédentes, caractérisé en ce que, en dehors des étapes de liaison de l'imprimante avec le terminal (B), l'imprimante (A) peut fonctionner de manière autonome et répondre à des programmes dits de « tests ».

## Claims

1. Apparatus enabling a first system to check the quantity of products packaged by a second system, characterised in that it comprises a printer (A) located at the second system and controlled from a terminal (B) delivering control instructions placed under the direct control of the first system and resulting in a message being printed on each packaged product, this printed message being variable for each product and its content being derived from an encoding algorithm known only to the first system in order to assure its authenticity.

2. Apparatus according to claim 1, characterised in that this algorithm is a function of the number of the marked package and of the hour, minute, second of marking.

3. Apparatus according to one of the preceding claims, characterised in that this message is a revenue band.

4. Apparatus according to one of the preceding claims, characterised in that accounting means enable the said first system to count the number of issued messages.

5. Apparatus according to one of the preceding claims, characterised in that the control instructions are issued from a terminal (B) located on the premises of the said first system.

6. Apparatus according to one of claims 1 and 2, characterised in that the control instructions are stored on a memory card containing a determined quantity of messages and fed to the second system by the said first system, the terminal (B) controlling the printer then being located on the premises of the second system.

7. Apparatus according to one of the preceding claims, characterised in that apart from the stages in which the printer is connected to the terminal (B), the printer (A) may operate in an independent manner and react to so-called « tests » programs.

## Patentansprüche

1. Vorrichtung, die einer ersten Stelle gestattet, die Menge von durch eine zweite Stelle verpackten Produkten zu kontrollieren, dadurch gekennzeichnet, daß sie einen bei der zweiten Stelle befindlichen Drucker (A) umfaßt, der von einem Datenendgerät (B) aus gesteuert wird, das Steuerbefehle ausgibt, die unter der direkten Kontrolle der ersten Stelle stehen und zum Ausdrucken einer Meldung auf jedem verpackten Produkt führen, wobei diese gedruckte Meldung für jedes Produkt veränderlich ist und ihr Inhalt aus einem nur der ersten Stelle bekannten Kryptierungsalgorithmus hervorgeht, um deren Echtheit sicherzustellen.

2. Vorrichtung nach Anspruch 1, dadurch gekennzeichnet, daß dieser Algorithmus eine Funktion der Nummer der markierten Verpackung sowie der Stunde, Minute und Sekunde der Markierung ist.

3. Vorrichtung nach einem der vorausgehenden Ansprüche, dadurch gekennzeichnet, daß diese Meldung eine Besteuerungsmarke ist.

4. Vorrichtung nach einem der vorausgehenden Ansprüche, dadurch gekennzeichnet, daß Verbuchungsmittel der ersten Stelle gestatten, die Anzahl abgegebener Meldungen abzuzählen.

5. Vorrichtung nach einem der vorausgehenden Ansprüche, dadurch gekennzeichnet, daß Steuerbefehle von einem in den Räumen der ersten Stelle befindlichen Datenendgerät (B) aus gegeben werden.

6. Vorrichtung nach einem der Ansprüche 1 und 2, dadurch gekennzeichnet, daß die Steuerbefehle in eine Speicherkarte eingespeichert werden, die eine vorgegebene Anzahl Meldungen enthält und von der ersten an' die zweite Stelle geliefert wird, wobei sich dann das den Drucker steuernde Datenendgerät (B) in den Räumen der zweiten Stelle befindet.

7. Vorrichtung nach einem der vorausgehenden Ansprüche, dadurch gekennzeichnet, daß außerhalb der Verbindungsstufen des Druckers mit dem Datenendgerät (B) der Drucker (A) selbständig funktionieren und auf sogenannte « Test »-Programme ansprechen kann.